# EUROPÄISCHE PATENTSCHRIFT

(11) **EP 0 744 268 B1**
(45) Veröffentlichungstag und Bekanntmachung des Hinweises auf die Patenterteilung: **31.03.1999**
(21) Anmeldenummer: 96890085.2
(22) Anmeldetag: 15.05.1996
(51) Int. Cl.: B29C 47/24, F16L 59/14, B29C 47/00

(54) **Ringdüse zum Strangpressen von Kunststoffschläuchen zur Rohrisolierung gegen Wärme- und Schallübertragung**
Annular die for the extrusion of plastic sheathing for the insulation of piping against heat and sound transmission
Buse annulaire pour l'extrusion de tubes en plastique pour l'isolation phonique et thermique des canalisations

(30) Priorität: 24.05.1995 AT 876/95
(43) Veröffentlichungstag der Anmeldung: 27.11.1996
(73) Patentinhaber: KE-KELIT Kunststoffwerk Gesellschaft m.b.H., A-4017 Linz (AT)
(72) Erfinder: Egger, Karl, 4203 Altenberg (AT)
(74) Vertreter: Hübscher, Heiner, Dipl.-Ing.

(56) Entgegenhaltungen:
- EP-A- 0 458 139
- DE-C- 974 783
- FR-A- 1 391 805
- FR-A- 2 017 685
- GB-A- 1 501 145

## Beschreibung

Die Erfindung bezieht sich auf eine Ringdüse zum Strangpressen von Kunststoffschläuchen zur Rohrisolierung gegen Wärme- und Schallübertragung, deren Düsenkern rippenförmige Oberflächenansätze, mit etwa dreieckigem Querschnitt, aufweist.

Bei bekannten Ringdüsen dieser Art ist der Mittelteil undrehbar und es verlaufen die rippenförmigen Oberflächenansätze in Richtung der Düsenachse, so daß dann der fertig extrudierte Kunststoffschlauch innere gerade achsparallele Längsnuten bzw. -rippen besitzt und bei der Verwendung eines solchen Schlauches zwischen dem den Wärmeträger leitenden Rohr und dem darüber gezogenen Isolierschlauch Längskanäle entstehen, die den Isolationswert herabsetzen, weil sie, insbesondere bei vertikalen Leitungen, Anlaß zur Wärmekonvektion geben. Es ist ferner bekannt (DE 34 22 479 A), an der Innenseite des Kunststoffschlauches zur Rohrisolierung ein Höckerprofil vorzusehen, doch handelt es sich dabei um Einzelpyramiden, die in Rohrlängsrichtung genau hintereinanderliegen, was ebenfalls zu Längskanälen mit Verringerung des Isolationswertes führt.

Es ist auch schon bekannt, den Düsenkern während des Extrudierens in einer Richtung um die Düsenachse zu drehen (FR 1 370 052 A und FR 1 391 805 A), so daß der Kunststoffschlauch schraubenförmige Erweiterungen erhält. Da aber die Erweiterungen zwar gewundene, aber doch in Längsrichtung durchlaufend offene Kanäle bilden, ist auch hier der Isolationswert herabgesetzt, ganz abgesehen davon, daß die Schraubenform der Schlauchwandung anderen Zwecken dient.

Ferner ist ein schlauchförmiger Rohrisolierkörper bekannt (AT 393 313 B), der an seiner Innenseite ein Hockerprofil aufweist und aus einem mit seinen Längsrändern zusammengebogenen Kunststoffband besteht, wobei die in jeweils benachbarten Umfangskreisen vorgesehen Höcker in Umfangsrichtung gegenseitig auf Lücke versetzt angeordnet sind. Hier werden zwar hinsichtlich der Wärmeisolierung ungünstige Längskanäle vermieden, doch ist die Herstellung vergleichsweise kompliziert, da eine Schaumstoffplatte mit zwei Profilwalzen deformiert und gleichzeitig gespaltet werden muß, wonach die beiden durch die Spaltung entstandenen Kunststoffbänder erst je für sich zu einem Schlauch zusammengebogen werden müssen.

Schließlich ist ein Werkzeugblock für das Strangpressen einer Kabelführungsvorrichtung bekannt (EP-A 458 139, D1), bei dem der Düsenkern eine alternierende Drehung ausführt. Hiebei sind die Oberflächenansätze des Düsenkernes aber wie eine Säge unmittelbar aneinander anschließend angeordnet, so daß sich dann beim fertigen Erzeugnis nur eine ganz geringe Biegsamkeit ergibt, da sich die Zahnflanken bei einer Biegung aneinanderlegen und erstarrend wirken, also kaum eine Biegsamkeit vorhanden ist, wie sie bei einem erfindungsgemäßen Schlauch gefordert werden muß.

Demgegenüber liegt der Erfindung die Aufgabe zugrunde, die eingangs geschilderte Ringdüse so zu verbessern, daß es mit ihrer Hilfe möglich ist, Kunststoffschläuche zur Rohrisolierung herzustellen, die ein ausgeprägtes Innenprofil unter Vermeidung von durchlaufenden achsparallelen Längskanälen aufweisen, dadurch ein verbessertes Isoliervermögen besitzen und dem Schlauch eine gute Biegsamkeit nach allen Richtungen verleihen

Die Erfindung löst diese Aufgabe dadurch, daß die Oberflächenansätze mit Abstand voneinander angeordnet sind und daß der Düsenkern während des Extrusionsvorganges über ein auf einen Bruchteil des Ringumfanges begrenztes Winkelmaß hin- und herdrehbar angetrieben ist.

Es wird also von einer üblichen Ringdüse ausgegangen, deren Düsenkern rippenförmige Oberflächenansätze besitzt, wobei durch das Strangpressen aber keine achsparallelen Längskanäle gebildet werden. Die Kanäle verlaufen vielmehr etwa zick-zack-förmig, so daß eine etwa mit den auf Lücke versetzt angeordneten Höckern vergleichbare Schlauchausbildung entsteht, wobei aber der Düsenkern der Ringdüse gerade durchlaufende Oberflächenansätze aufweist und eine wesentlich beschleunigte und vereinfachte Herstellungsart erzielt wird. Die besondere Form der im Werkstück gebildeten Nuten bzw. Erhöhungen senken die Wärmekonvektion auf ein Mindestmaß, weil sich durch das Hin- und Herdrehen mehr oder weniger abgeschlossene Räume ergeben. Darüber hinaus ergibt sich durch den Abstand der Oberflächenansätze voneinander der Vorteil, die Biegsamkeit der hergestellten Kunststoffschläuche gegenüber solchen mit sägenzahnartig aneinander anschließenden inneren Längsnuten wesentlich zu erhöhen und dadurch das Aufziehen der Schläuche auf das jeweilige Rohr zu erleichtern und dessen Biegsamkeit zu verbessern. Der hergestellte Schlauch kann selbstverständlich auch außenseitig zusätzlich beschichtet werden.

In der Zeichnung ist der Erfindungsgegenstand beispielsweise rein schematisch dargestellt und zwar zeigen
- Fig. 1: eine Ringdüse im Querschnitt und
- Fig. 2: einen teilweise aufgerissenen, mit der erfindungsgemäßen Vorrichtung hergestellten Kunststoffschlauch.

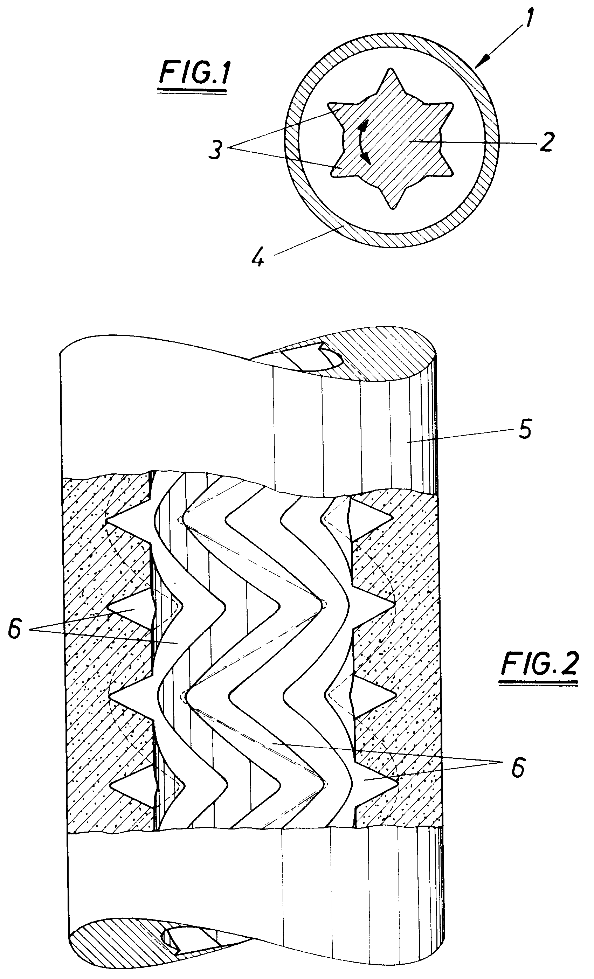

Der Düsenkern 2 der Ringdüse 1 eines Extruders weist rippenförmige, mit Abstand voneinander angeordnete Oberflächenansätze 3 mit vorzugsweise etwa dreieckigem Querschnitt auf, wogegen der Außenmantel 4 völlig glatt ausgebildet ist. Der Düsenkern 2 wird während des Extrusionsvorganges hin- und hergedreht, wobei das Winkelmaß dieser Drehung aber nur einen Bruchteil des Ringumfanges beträgt. Obwohl die rippenförmigen Oberflächenansätze 3 in der Ringdüse 1 völlig achsparallel verlaufen, wird durch die Hin- und Herdrehung eine Innenprofilierung des hergestellten Kunststoffschlauches 5 erreicht, wie sie aus Fig. 2 ersichtlich ist. Durch die Hin- und Herdrehung des Düsenkerns 2 wird eine etwa zick-zack-förmige Ausbildung der Nuten 6 erzielt, ohne die Biegsamkeit durch zu enge Oberflächenansätze zu verringern.

## Patentansprüche

1. Ringdüse (1) zum Strangpressen von Kunststoffschläuchen (5) zur Rohrisolierung gegen Wärme- und Schallübertragung mit einem Düsenkern (2) der rippenförmige Oberflächenansätze (3) mit etwa dreieckigem Querschnitt aufweist, dadurch gekennzeichnet, daß die Oberflächenansätze (3) mit Abstand voneinander angeordnet sind und der Düsenkern (2) während des Extrusionsvorganges über ein auf einen Bruchteil des Düsenumfanges begrenztes Winkelmaß hin- und herdrehbar ausgebildet ist.

## Claims

1. An annular nozzle (1) for the extrusion of plastic tubes (5) for insulating pipes against heat and sound transmission, comprising a nozzle core (2) for the substantially triangular cross-section surface projections (3) in the form of ribs, characterised in that the surface projections (3) are spaced apart and the nozzle core (2) is so constructed that during the extrusion process it can rotate in reciprocation over an angle restricted to a fraction of the nozzle circumference.

## Revendications

1. Filière annulaire (1), pour l'extrusion de tuyaux en matière plastique (5), pour assurer l'isolation des tubes contre la transmission de chaleur et du bruit, avec un noyau de filière (2) présentant des appendices de surface (3) en forme de nervures à section transversale à peu près triangulaire, caractérisé par le fait que les appendices de surface (3) sont disposées à distance les uns des autres, et le noyau de filière (2) est susceptible de tourner dans un sens et dans l'autre pendant le processus d'extrusion, de la valeur d'un angle limité à une fraction de la circonférence de la tuyère.
